# EUROPÄISCHE PATENTSCHRIFT

(11) **EP 1 900 286 B1**
(45) Veröffentlichungstag und Bekanntmachung des Hinweises auf die Patenterteilung: **24.03.2010**
(21) Anmeldenummer: 08000623.2
(22) Anmeldetag: 15.01.2008
(51) Int. Cl.: A23G 3/54

(54) **Süßware, insbesondere Praline**
Confectionery product, in particular praline
Article de confiserie, notamment praline

(43) Veröffentlichungstag der Anmeldung: 19.03.2008
(73) Patentinhaber: Peters GmbH, 59557 Lippstadt (DE)
(72) Erfinder: Frochte-Peters, Norbert, 59555 Lippstadt (DE)
(74) Vertreter: Basfeld, Rainer

(56) Entgegenhaltungen:
- EP-A- 0 589 820
- EP-A- 1 444 900
- WO-A-02/089595
- WO-A-2006/108306
- WO-A-2007/079599
- WO-A-2007/087731
- DE-A1- 3 710 539
- DE-U1- 29 711 448
- US-A- 5 843 512

## Beschreibung

Die vorliegende Erfindung betrifft eine Süßware, insbesondere eine Praline, gemäß dem Oberbegriff des Anspruchs 1.

Eine Süßware der vorgenannten Art ist aus der US 5,843,512 bekannt. Die darin beschriebene Süßware ist insbesondere als eisgefüllter Schokoriegel mit einer in den Boden integrierten Waffel ausgebildet, wobei der Anteil der Eisfüllung an der Süßware etwa 50% ausmacht. Die Seitenwände des Schokoriegels sind geneigt und verlaufen vom Boden zum Deckel aufeinander zu. Die Seitenwände weisen eine Dicke zwischen 0,5 bis 3,0 mm, insbesondere zwischen 1,5 und 2,5 mm auf. In der Mitte der Deckelfläche des Schokoriegels ist eine sich in Richtung auf den Boden erstreckende Einschnürung vorgesehen.

Eine weitere Süßware ist aus der DE 297 11 448 U1 bekannt. Zur Herstellung der darin beschriebenen Praline wird eine im wesentlichen kugelförmige Aufnahme mit einer oberen Öffnung erzeugt und mit einer geeigneten Füllung versehen. Daran anschließend wird die Öffnung geschlossen. Die Aufnahme ist vergleichsweise dickwandig, was geschmacklich von Nachteil sein kann.

Das der vorliegenden Erfindung zugrunde liegende Problem ist die Schaffung einer Süßware der eingangs genannten Art, die ein interessanteres oder raffinierteres Geschmackserlebnis bietet.

Dies wird erfindungsgemäß durch eine Süßware der eingangs genannten Art mit den kennzeichnenden Merkmalen des Anspruchs 1 erreicht. Die Unteransprüche betreffen bevorzugte Ausgestaltungen der Erfindung.

Anspruch 1 sieht vor, dass die Aufnahme eine Höhe zwischen 3 mm bis 8 mm aufweist.

Dabei besteht die Möglichkeit, dass die mindestens eine Seitenwand eine Wandstärke zwischen 0,8 mm und 1,4 mm, insbesondere zwischen 1,0 mm und 1,2 mm aufweist, beispielsweise eine Wandstärke von 1,1 mm aufweist. Weiterhin besteht die Möglichkeit, dass der Boden eine Dicke von weniger als 2,0 mm, insbesondere zwischen 0,8 mm und 1,6 mm, insbesondere zwischen 1,0 mm und 1,5 mm aufweist, beispielsweise eine Dicke von 1,3 mm aufweist. Durch derartig dünnwandige Aufnahmen wird ein interessantes Geschmackserlebnis geboten, unter anderem weil der Anteil der Füllung an der Süßware beziehungsweise Praline erhöht wird.

Es kann vorgesehen sein, dass der Boden rechteckig, insbesondere quadratisch, ist und vier Seitenwände vorgesehen sind. Insbesondere kann dabei die Länge mindestens einer der Seitenwände, vorzugsweise sämtlicher Seitenwände, größer als 30 mm, insbesondere größer als 33 mm, vorzugsweise größer als 35 mm, beispielsweise gleich 36 mm sein. Eine derartige, vergleichsweise große, rechteckige Süßware weist einerseits eine originelle Gestalt auf und bietet andererseits aufgrund der feinen, dünnwandigen Aufnahme ein neuartiges Geschmackserlebnis.

Dabei kann die von der mindestens einen Seitenwand umgebene, von der Oberseite des Bodens gebildete Grundfläche der Aufnahme größer als 8,0 cm², insbesondere größer als 10 cm², vorzugsweise größer als 11 cm² sein, beispielsweise etwa 11,4 cm² groß sein. derartig dünnwandige Aufnahmen wird ein interessantes Geschmackserlebnis geboten, unter anderem weil der Anteil der Füllung an der Süßware beziehungsweise Praline erhöht wird.

Es kann vorgesehen sein, dass der Boden rechteckig, insbesondere quadratisch, ist und vier Seitenwände vorgesehen sind. Insbesondere kann dabei die Länge mindestens einer der Seitenwände, vorzugsweise sämtlicher Seitenwände, größer als 30 mm, insbesondere größer als 33 mm, vorzugsweise größer als 35 mm, beispielsweise gleich 36 mm sein. Eine derartige, vergleichsweise große, rechteckige Süßware weist einerseits eine originelle Gestalt auf und bietet andererseits aufgrund der feinen, dünnwandigen Aufnahme ein neuartiges Geschmackserlebnis.

Dabei kann die von der mindestens einen Seitenwand umgebene, von der Oberseite des Bodens gebildete Grundfläche der Aufnahme größer als 8,0 cm², insbesondere größer als 10 cm², vorzugsweise größer als 11 cm² sein, beispielsweise etwa 11,4 cm² groß sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine Draufsicht auf eine Aufnahme einer erfindungsgemäßen Süßware;
- Fig. 1b: eine Seitenansicht der Aufnahme gemäß Fig. 1 a;
- Fig. 2: eine Schnittansicht der Aufnahme nach Einbringung einer Füllung;
- Fig. 3: eine Schnittansicht der gefüllten Aufnahme nach dem Versehen mit einem Überzug;
- Fig. 4: eine Schnittansicht der fertig dekorierten Süßware.

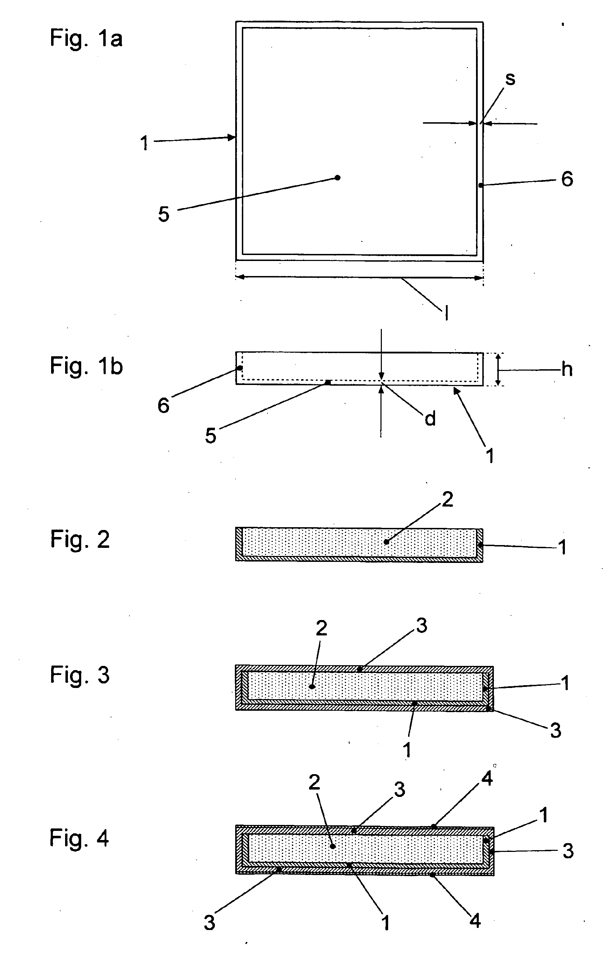

Fig. 4 lässt sich entnehmen, dass eine erfindungsgemäße Süßware eine Aufnahme 1, eine in die Aufnahme 1 eingebrachte Füllung 2, einen die Aufnahme 1 und die Füllung 2 umgebenden Überzug 3 sowie auf der Oberseite und/oder der Unterseite des Überzugs 3 ein Dekor 4 umfasst.

Die Aufnahme 1 ist in Fig. 1a und Fig. 1b detailliert ersichtlich. Die Aufnahme weist einen Boden 5 und vier sich von diesem nach oben erstreckende Seitenwände 6 auf. Der Boden 5 ist quadratisch und weist eine Dicke d von 1,3 mm auf. Die Seitenwände 6 sind rechteckig und weisen eine Länge I von 36,0 mm sowie eine Wandstärke s von 1,1 mm auf. Die von den Seitenwänden 6 umgebene Grundfläche des Bodens 5 beträgt demnach etwa 11,4 cm². Die Höhe h der Aufnahme 1 beträgt 5,0 mm.

Die Aufnahme 1 ist aus einem Material gefertigt, das aus Schokolade besteht oder Schokolade enthält. Das Gewicht der Aufnahme 1 kann beispielsweise 2,1 g betragen.

Fig. 2 zeigt die mit einer Füllung 2 gefüllte Aufnahme 1. Die Füllung 2 kann aus einer üblichen mit Geschmacksstoffen wie Alkoholika versehenen Pralinenfüllung bestehen. Die Füllung 2 kann den Innenraum der Aufnahme 1 vollständig ausfüllen und bis oder beinahe bis an das obere Ende der Seitenwände 6 ragen. Das Gewicht der Füllung 2 kann 5,5 g betragen.

Fig. 3 zeigt die gefüllte, mit einem Überzug 3 aus beispielsweise Schokolade versehene Aufnahme 1. Bei der fertigen Süßware gemäß Fig. 4 sind zusätzlich noch die Oberseite und die Unterseite des Überzugs 3 mit einem Dekor 4 versehen. Die Süßware kann ein Gesamtgewicht von etwa 10,5 g aufweisen. Weiterhin kann die fertige Süßware eine Seitenlänge von etwa 37,5 mm sowie eine Höhe von etwa 8,0 mm aufweisen.

Die Aufnahme 1 wird vermittels einer nicht abgebildeten Frozen-Shell-Maschine hergestellt. In dieser Frozen-Shell-Maschine ist ein Luftentfeuchter vorgesehen, der im Inneren der Maschine die Luftfeuchtigkeit auf annähernd 0% senkt. Von einer Temperiereinheit der Frozen-Shell-Maschine wird das Material für die Aufnahme 1 in einem Temperaturbereich zwischen 20°C und 30°C mehrfach aufgewärmt und abgekühlt. Dadurch bilden sich kleine Schokoladenkristalle, die teilweise wieder angeschmolzen werden. Das derartig vorbereitete Material wird in einem Reservoir auf einer Temperatur von etwa 30°C vorgehalten.

Die Frozen-Shell-Maschine umfasst weiterhin ein Mehrzahl von Stempeln, die beispielsweise in Form einer Matrix an einem entsprechenden Halter angeordnet sind. Beispielsweise können die Stempel in sieben Reihen und neun Spalten angeordnet sein. Die Abmessungen der Stempel entsprechen jeweils dem Inneren einer der Aufnahmen 1. Die Stempel werden auf eine Temperatur zwischen - 2°C und -15°C gekühlt. Die Kühlung der Stempel kann durch eine Wasserkühlung erfolgen. Durch den Luftentfeuchter wird die Bildung von Kondenswasser an den Stempeln verhindert.

Die Stempel werden für einen Zeitraum zwischen 1,5 s und 6 s zumindest teilweise in das Reservoir mit dem erwärmten Material für die Aufnahmen 1 eingetaucht. Aufgrund des Temperaturunterschiedes erstarrt eine Schicht des Materials an den Außenseiten der Stempel und kann zusammen mit diesen aus dem Reservoir entnommen werden. Durch Veränderung der Prozessparameter (Temperatur des Materials und der Stempel, Verweildauer der Stempel in dem Material, Zusammensetzung des Materials und so weiter) kann Einfluss auf die Wandstärke s der Seitenwände 6 und die Dicke d des Bodens 5 der Aufnahmen 1 genommen werden.

Das Absetzen der an den Stempeln anhaftenden Aufnahmen 1 auf einer Unterlage geschieht durch Vibration der Stempel und/oder durch Ausblasen von Luft durch die den anhaftenden Aufnahmen 1 zugewandten Seiten der Stempel. Die Unterlage, auf der die Aufnahmen 1 abgesetzt werden, kann beispielsweise ein Förderband aus Polyurethan sein, das die Aufnahmen 1 von der Frozen-Shell-Maschine weg transportiert. Das Förderband kann die Aufnahmen 1 einer Abrollvorrichtung zuführen, mit der die Höhen h der Aufnahmen 1 nivelliert werden können. Das Förderband kann gekühlt sein, so dass die Aufnahmen 1 auf eine Temperatur von etwa 1 1 °C abgekühlt werden und so die für den Füllvorgang notwendige Festigkeit erhalten.

Anschließend an das Abkühlen oder aber auch nach einer zusätzlichen Lagerzeit wird die Füllung 2, die aus einer gießfähigen Masse besteht, in die Aufnahme 1 eingegossen. Die Füllung 2 kann ebenfalls Schokolade und/oder Geschmacksstoffe wie Alkoholika enthalten. Nach Einbringung der Füllungen 2 werden die gefüllten Aufnahmen 1 auf etwa 15°C abgekühlt und für eine längere Zeit, wie beispielsweise 12 Stunden, gelagert.

Daran anschließend werden die gefüllten Aufnahmen 1 mit einem Überzug 3 versehen, der beispielsweise aus Schokolade besteht. Direkt nach dem Aufbringen des Überzugs 3 kann auf dessen Ober-und/oder Unterseite mittels einer Folie ein Dekor 4 aufgebracht werden. Die Folie kann nach der Aufbringung des Dekors 4 wieder entfernt werden.

## Patentansprüche

1. Süßware, insbesondere Praline, umfassend
- eine Aufnahme (1) aus einem Material, das aus Schokolade besteht oder Schokolade enthält, wobei die Aufnahme (1) einen Boden (5) und mindestens eine Seitenwand (6) aufweist, wobei die mindestens eine Seitenwand (6) eine Wandstärke (s) von weniger als 1,5 mm aufweist;
- eine Füllung (2), die in der Aufnahme (1) angeordnet ist;
**dadurch gekennzeichnet, dass** die Aufnahme (1) eine Höhe (h) zwischen 3 mm bis 8 mm aufweist.

2. Süßware nach Anspruch 1, **dadurch gekennzeichnet, dass** die mindestens eine Seitenwand (6) eine Wandstärke (s) zwischen 0,8 mm und 1,4 mm, insbesondere zwischen 1,0 mm und 1,2 mm aufweist, beispielsweise eine Wandstärke (s) von 1,1 mm aufweist.

3. Süßware nach einem der Ansprüche 1 oder 2, **dadurch gekennzeichnet, dass** vier Seitenwände (6) vorgesehen sind, die sich von dem Boden (5) nach oben erstrecken.

4. Süßware nach einem der Ansprüche 1 bis 3, **dadurch gekennzeichnet, dass** der Boden (5) eine Dicke (d) von weniger als 2,0 mm, insbesondere zwischen 0,8 mm und 1,6 mm, insbesondere zwischen 1,0 mm und 1,5 mm aufweist, beispielsweise eine Dicke (d) von 1,3 mm aufweist.

5. Süßware nach einem der Ansprüche 1 bis 4, **dadurch gekennzeichnet, dass** der Boden (5) rechteckig, insbesondere quadratisch, ist.

6. Süßware nach einem der Ansprüche 3 bis 5, **dadurch gekennzeichnet, dass** die Länge (I) mindestens einer der Seitenwände (6), vorzugsweise sämtlicher Seitenwände (6), größer als 30 mm, insbesondere größer als 33 mm, vorzugsweise größer als 35 mm, beispielsweise gleich 36 mm ist.

7. Süßware nach einem der Ansprüche 1 bis 6, **dadurch gekennzeichnet, dass** die von der mindestens einen Seitenwand (6) umgebene, von der Oberseite des Bodens (5) gebildete Grundfläche der Aufnahme (1) größer als 8,0 cm², insbesondere größer als 10 cm², vorzugsweise größer als 11 cm² ist, beispielsweise etwa 11,4 cm² groß ist.

8. Süßware nach einem der Ansprüche 1 bis 7, **dadurch gekennzeichnet, dass** die Aufnahme (1) eine Höhe (h) zwischen 4 mm bis 6 mm, beispielsweise eine Höhe (h) von etwa 5 mm aufweist.

9. Süßware nach einem der Ansprüche 1 bis 8, **dadurch gekennzeichnet, dass** die Süßware einen Überzug (3) aus einem Material umfasst, das aus Schokolade besteht oder Schokolade enthält, wobei der Überzug (3) die Aufnahme (1) und/oder die Füllung (2) zumindest abschnittsweise umgibt.

## Claims

1. Confectionery product, in particular a praline, comprising:
- a receptacle (1) made of a material consisting of chocolate or containing chocolate, wherein the receptacle (1) has a base (5) and at least one side wall (6), wherein the at least one side wall (6) has a wall thickness (s) of less than 1.5 mm;
- a filling (2) which is arranged in the receptacle (1);
**characterized in that** the receptacle (1) has a height (h) of between 3 mm and 8 mm.

2. Confectionery product according to Claim 1, **characterized in that** the at least one side wall (6) has a wall thickness (s) of between 0.8 mm and 1.4 mm, in particular between 1.0 mm and 1.2 mm, for example a wall thickness (s) of 1.1 mm.

3. Confectionery product according to either of Claims 1 and 2, **characterized in that** four side walls (6) which extend upwardly from the base (5) are provided.

4. Confectionery product according to one of Claims 1 to 3, **characterized in that** the base (5) has a thickness (d) of less than 2.0 mm, in particular between 0.8 mm and 1.6 mm, in particular between 1.0 mm and 1.5 mm, for example has a thickness (d) of 1.3 mm.

5. Confectionery product according to one of Claims 1 to 4, **characterized in that** the base (5) is rectangular, in particular square.

6. Confectionery product according to one of Claims 3 to 5, **characterized in that** the length (1) of at least one of the side walls (6), preferably of all the side walls (6), is greater than 30 mm, in particular greater than 33 mm, preferably greater than 35 mm, for example equal to 36 mm.

7. Confectionery product according to one of Claims 1 to 6, **characterized in that** the size of the base area of the receptacle (1), surrounded by the at least one side wall (6) and formed by the upper side of the base (5), is greater than 8.0 cm², in particular greater than 10 cm², preferably greater than 11 cm², for example around 11.4 cm².

8. Confectionery product according to one of Claims 1 to 7, **characterized in that** the receptacle (1) has a height (h) of between 4 mm and 6 mm, for example a height (h) of around 5 mm.

9. Confectionery product according to one of Claims 1 to 8, **characterized in that** the confectionery product comprises a coating (3) made of a material consisting of chocolate or containing chocolate, wherein the coating (3) at least partially surrounds the receptacle (1) and/or the filling (2).

## Revendications

1. Produit de confiserie, en particulier praline, comprenant :
- un logement (1) constitué d'un matériau constitué de chocolat ou de contenant du chocolat, le logement (1) présentant un fond (5) et au moins une paroi latérale (6), l'épaisseur (s) de la ou les parois latérales (6) étant de moins de 1,5 mm,
- un remplissage (2) disposé dans le logement (1),
**caractérisé en ce que**
la hauteur (h) du logement (1) est comprise entre 3 mm et 8 mm.

2. Produit de confiserie selon la revendication 1, **caractérisé en ce que** l'épaisseur (s) de la ou des parois latérales (6) est comprise entre 0,8 mm et 1,4 mm, en particulier entre 1,0 mm et 1,2 mm et est par exemple une épaisseur (s) de paroi de 1,1 mm.

3. Produit de confiserie selon l'une des revendications 1 ou 2, **caractérisé en ce qu'**il présente quatre parois latérales (6) qui s'étendent vers le haut partant du fond (5).

4. Produit de confiserie selon l'une des revendications 1 à 3, **caractérisé en ce que** l'épaisseur (d) du fond (5) est de moins de 2,0 mm, est en particulier comprise entre 0,8 mm et 1,6 mm, en particulier entre 1,0 mm et 1,5 mm et est par exemple une épaisseur (d) de 1,3 mm.

5. Produit de confiserie selon l'une des revendications 1 à 4, **caractérisé en ce que** le fond (5) est rectangulaire et en particulier carré.

6. Produit de confiserie selon l'une des revendications 3 à 5, **caractérisé en ce que** la longueur (1) d'au moins l'une des parois latérales (6) et de préférence de toutes les parois latérales (6) est supérieure à 30 mm, en particulier supérieure à 33 mm, de préférence supérieure à 35 m et par exemple égale à 36 mm.

7. Produit de confiserie selon l'une des revendications 1 à 6, **caractérisé en ce que** la surface de base du logement (1) entourée par la ou les parois latérales (6) et formée par le côté supérieur du fond (5) est supérieure à 8,0 cm², en particulier supérieure à 10 cm², de préférence supérieure à 11 cm² et par exemple d'une taille d'environ 11,4 cm².

8. Produit de confiserie selon l'une des revendications 1 à 7, **caractérisé en ce que** la hauteur (h) du logement (1) est comprise entre 4 mm et 6 mm et est par exemple une hauteur (h) d'environ 5 mm.

9. Produit de confiserie selon l'une des revendications 1 à 8, **caractérisé en ce que** le produit de confiserie contient un recouvrement (3) en un matériau qui est constitué de chocolat ou qui contient du chocolat, le recouvrement (3) entourant au moins certaines parties du logement (1) et/ou du remplissage (2) .
